## Europäisches Patentamt

## European Patent Office

## Office européen des brevets

(11) Veröffentlichungsnummer: **0 173 253**
A2

(12) # EUROPÄISCHE PATENTANMELDUNG

(21) Anmeldenummer: 85110562.7

(22) Anmeldetag: 22.08.85

(51) Int. Cl.⁴: **G 01 P 13/00,** G 01 F 13/00, G 01 F 1/36

(30) Priorität: 30.08.84 DE 3431891

(43) Veröffentlichungstag der Anmeldung: 05.03.86 Patentblatt 86/10

(84) Benannte Vertragsstaaten: AT BE CH DE FR GB IT LI NL

(71) Anmelder: **LANG APPARATEBAU GMBH, Raiffeisenstrasse 7, D-8221 Siegsdorf Obb. (DE)**

(72) Erfinder: **Bödecker, Kay, Lindenstrasse 20, D-8224 Chieming (DE)**
Erfinder: **Kürzeder, Ludwig, St.-Georg-Strasse 40, D-8200 Rosenheim (DE)**

(74) Vertreter: **Bornemann, Dieter, Dipl.-Ing., c/o Henkel Kommanditgesellschaft auf Aktien - Patentabteilung - Postfach 1100 Henkelstrasse 67, D-4000 Düsseldorf (DE)**

(54) **Dosierkontrolleinrichtung und Verfahren zum Betrieb der Einrichtung.**

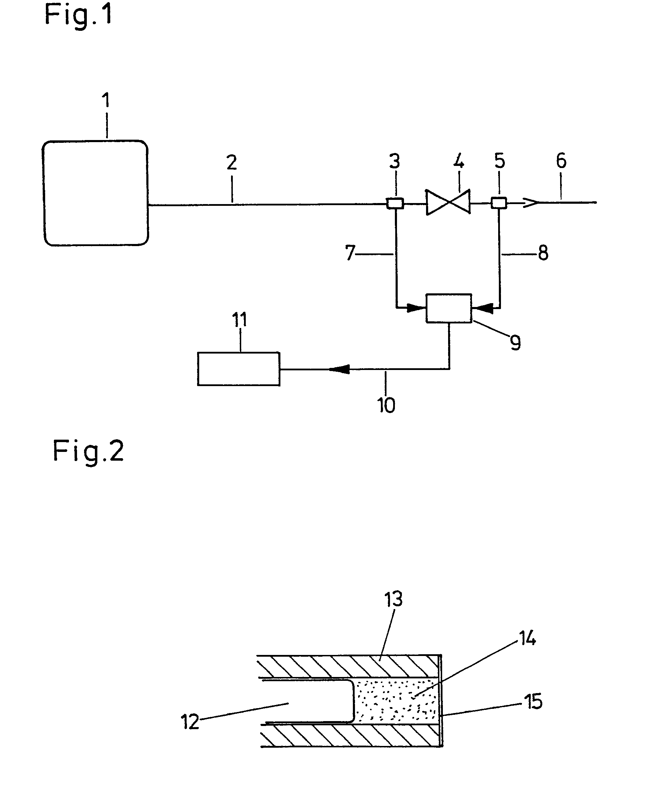

(57) Eine Dosierkontrolleinrichtung einer ein Dosierventil (4) enthaltenden Dosierleitung (2) mit einem Druckaufnehmer (5) zum Erfassen des Aufbaus des Arbeitsdrucks des zu dosierenden Produkts auf der Ausgangsseite des Dosierventils (4) wird auch bei Temperaturänderungen störunanfällig und bleibt bei allen Betriebsbedingungen funktionsbereit, wenn ein weiterer Druckaufnehmer (3) auf der Eingangsseite des Dosierventils (4) zum Erfassen des Vordrucks vorgesehen wird und als Steuergröße nur die Differenz von Vordruck und Arbeitsdruck herangezogen wird (Fig. 1).

0173253

Raiffeisenstr. 7                          LANG APPARATEBAU GMBH

8221 Siegsdorf Obb., den 28. 8. 1984      Bor/C


P a t e n t a n m e l d u n g
D 7147


"Dosierkontrolleinrichtung und Verfahren zum Betrieb der
Einrichtung"

Die Erfindung betrifft eine Dosierkontrolleinrichtung
einer ein Dosierventil enthaltenden Dosierleitung mit
einem Druckaufnehmer zum Erfassen des Aufbaus des Arbeitsdrucks des zu dosierenden Produkts in der Dosierleitung
auf der Ausgangsseite des Dosierventils. Sie betrifft
ferner ein Verfahren zum Betrieb der Dosierkontrolleinrichtung.

Bei den heute üblichen, in höchstem Maße automatisierten
und rechnergesteuerten Fertigungsverfahren, beispielsweise in der Automobilindustrie, ist es nicht mehr ausreichend, bei einer Dosierung die Freigabe der Pumpenaktivierung, die Steuerzeiten von Dosierventilen usw. zu überwachen. Hierdurch wird nämlich noch keine Aussage dazu
erhalten, ob tatsächlich dosiert worden ist. Es kann
beispielsweise vorkommen, daß das überwachte Dosierventil verstopft ist oder die das Ventil beaufschlagende
Pumpe keinen Vordruck aufbaut bzw. das zu dosierende Medium nicht fördert. Im Ergebnis können also trotz der
Überwachung mit dem zu dosierenden Medium nicht ausreichend oder gar nicht behandelte Produkte erzeugt werden.

Um aufwendige Nachbehandlungen oder Ausschuß zu vermeiden, ist ein Verfahren entwickelt worden, bei dem der
Druckaufbau mit Hilfe von Dehnmeßstreifen überwacht und
ausgewertet wird. Dieses Verfahren, bei dem absolute Druckwerte gemessen werden, ist jedoch störanfällig, da Temperaturänderungen zu Fehlmessungen führen können und bei

...

D 7147                    2

sehr geringen Dosiermengen zuverlässige Meßwerte praktisch
nicht zu erhalten sind.

Der Erfindung liegt die Aufgabe zugrunde, ein Dosierüberwachungssystem zu schaffen, das unter allen in der Praxis
vorkommenden Bedingungen, insbesondere auch bei Temperaturschwankungen und sowohl bei geringen als bei großen
Dosiermengen gleichermaßen zuverlässig einzusetzen ist.
Die erfindungsgemäße Lösung ist bei der Dosierkontrolleinrichtung mit einem Druckaufnehmer zum Erfassen des
Aufbaus des Arbeitsdrucks auf der Dosierventil-Ausgangsseite gekennzeichnet durch einen (weiteren) Druckaufnehmer auf der Eingangsseite des Dosierventils zum Erfassen
des Vordrucks des zu dosierenden Produktes in der Dosierleitung und durch Mittel zum Bilden der Differenz von
Vordruck und Arbeitsdruck mit Differenzdruck-Ausgangssignal.

Für ein Verfahren zum Betrieb der Dosierkontrolleinrichtung besteht die erfindungsgemäße Lösung vorzugsweise
darin, daß innerhalb einer vorgegebenen Dosierzeit die
Differenz zwischen Vordruck einerseits und Arbeitsdruck
andererseits ermittelt und auf eine übergeordnete Steuer-
oder Alarmeinheit geschaltet wird. Insbesondere soll der
Arbeitsdruckaufbau und der Arbeitsdruckabbau in Differenzdruckwerten in Bezug auf den Vordruck gemessen werden.
Verbesserungen und weitere Ausgestaltungen werden in den
Unteransprüchen angegeben.

Die Dosierkontrolleinrichtung wird also auch bei Temperaturänderungen störunanfällig und bleibt bei allen Betriebsbedingungen funktionsbereit, wenn ein weiterer
Druckaufnehmer auf der Eingangsseite des Dosierventils

...

D 7147                          3

zum Erfassen des Vordrucks angeordnet wird und wenn als Steuergröße nur die Differenz von Vor- und Arbeitsdruck herangezogen wird. Es handelt sich dann nämlich um eine relative Messung, bei der Einflüsse schwankender Außenbedingungen, insbesondere der Temperatur, kompensiert werden; insbesondere liegen bei Differenzbildung die Ausgangssignale unabhängig von der Größe der Dosiermenge immer etwa in der gleichen absoluten Größenordnung, so daß die Messung für kleine und große Dosiermengen gleichermaßen zuverlässig wird.

Die erfindungsgemäß erhaltenen Differenzdruckwerte können beispielsweise über eine nachgeschaltete Steuerelektronik, die bei normalem Ablauf der Dosierung ein Positivsignal ausgibt, ausgewertet werden. Bei jeder Abweichung von einer vorgegebenen Norm soll die nachgeschaltete Einrichtung ein Negativsignal an eine übergeordnete Steuereinheit abgeben, derart, daß die Produktion von Ausschuß vermieden wird und eventuelle Fehler der Dosiereinrichtung korrigiert werden können.

Als Vergleichsgröße der erfindungsgemäß auszuführenden Messungen kann der auf der Eingangsseite des zu überwachenden Dosierventils anstehende Pumpendruck oder - bei Fremddruckbeaufschlagung - der Behälterdruck herangezogen werden. Mit dieser Führungsgröße bzw. mit diesem Vordruck werden jeweils sämtliche weiteren Messungen beaufschlagt bzw. verglichen. Es ergibt sich dabei, daß im Normalfall ein kleiner Vordruck einen kleinen Arbeitsdruck bedeutet, so daß die Beträge der Druckdifferenz immer annähernd in derselben Größenordnung liegen oder jedenfalls in viel geringerem Maße als die absoluten Beträge der Vergleichsdrucke schwanken.

...

D 7147                4

Vorzugsweise wird der Arbeitsdruck hinter dem Dosierventil und vor der Ausgabestelle, vorzugsweise zwischen der Ventilöffnungsnadel und der Dosierdüse, gemessen. Der Arbeitsdruckaufbau und der Arbeitsdruckabbau werden innerhalb der eingestellten Dosierzeit in Bezug auf den als Führungsgröße herangezogenen Vordruck (der Ventileingangsseite) ermittelt, d.h. diese Arbeitsdrucke werden immer mit dem Vordruck verglichen und nur in Bezug auf diesen - als Differenzdruck - ausgewertet. Um für die Differenzbildung möglichst vergleichbare Druckwerte zu erhalten, kann es zweckmäßig sein, die Druckaufnehmer von Vordruck und Arbeitsdruck möglichst nahe beieinander an dem Dosierventil zu stationieren.

In vielen Fällen ist es erforderlich, einen direkten Kontakt von Druckaufnehmer und zu dosierendem Produkt zu vermeiden, um unerwünschte Nebenwirkungen, wie Produktausfällungen, Korrosion und dergleichen, auszuschließen. Gemäß weiterer Erfindung können daher die Druckaufnehmer in einem zusätzlichen Gehäuse untergebracht und mit einer Pufferflüssigkeit beaufschlagt werden. Die Pufferflüssigkeit soll dann gegen das zu dosierende Produkt mit Hilfe einer Membran oder dergleichen abgedichtet werden. Die Materialien von zusätzlichem Gehäuse und Membranen können jeweils produktspezifisch ausgelegt werden, in vielen Fällen ist Polytetrafluoräthylen geeignet. Die Übertragungsträgheit von Pufferflüssigkeit und Membran lassen sich in der elektronischen Auslegung berücksichtigen, sie können beispielsweise etwa 6 msec betragen.

...

D 7147                    5

Anhand der schematischen Darstellung von Ausführungsbeispielen werden weitere Einzelheiten der Erfindung erläutert. Es zeigen:

Fig. 1   der Prinzipaufbau einer Dosierkontrolleinrichtung; und
Fig. 2   einen Schnitt durch ein von dem zu do-
         sierenden Produkt abgeschirmtes Druckauf-
         nehmergehäuse.

In der Dosierkontrolleinrichtung nach Fig. 1 wird der
Vordruck durch einen Druckbehälter oder eine Pumpe 1
geliefert. In der angeschlossenen Dosierleitung 2 folgen
ein Vordruckaufnehmer 3, ein Dosierventil 4, ein Arbeitsdruckaufnehmer 5 und eine Dosierspitze 6 aufeinander.
Als Druckaufnehmer 3 und 5 werden vorzugsweise Piezoquarze
eingesetzt.

Zur Auswertung werden in der erfindungsgemäßen Dosierkontrolleinrichtung nach Fig. 1 die an den Druckaufnehmern 3 und 5 ermittelten Werte über Leitungen 7 und 8
an ein Gerät 9 zum Bilden des Differenzdrucks weitergeleitet. Das Differenzdruckgerät 9 liefert ein Ausgangssignal 10 an eine übergeordnete Steuereinheit 11, z.B.
auch an eine Warn- oder Alarmanlage und dergleichen.

Es bestehen folgende Auswertungsmöglichkeiten der Dosierkontrolleinrichtung nach Fig. 1:

a)  Der durch die Differenzbildung relativ zum
    Vordruck ermittelte Arbeitsdruckaufbau erfolgt
    ebenso wie der Arbeitsdruckabbau innerhalb der
    vorgegebenen Dosierzeit; es wird also ordnungs-
    gemäß dosiert.

...

D 7147                    6

b) Der Vordruck ist vorhanden, der Arbeitsdruck wird aufgebaut, aber nicht wieder abgebaut, die Einrichtung liefert daher ein Störsignal; aus dem Meßergebnis ergibt sich zusätzlich, daß die Dosierleitung im Anschluß an das Dosierventil, beispielsweise wegen einer verstopften Dosierspitze, undurchlässig ist.

c) Die Messung ergibt, daß Vordruck vorhanden ist, aber Arbeitsdruck nicht aufgebaut wird, es erfolgt daher Störmeldung; das Meßergebnis besagt außerdem, daß eine Dosierhilfsvorrichtung, beispielsweise eine Dosierspitze für feinste Dosierungen, fehlt.

d) Die Messung ergibt fehlenden Vordruck, die erfindungsgemäße Einrichtung gibt eine Störmeldung ab; aus dem Meßergebnis ist zu entnehmen, daß ein anderer Fehler als bei b) oder c) vorliegt, es kommen z.B. Leitungsdruck, Pumpen- oder Hilfsenergieausfall und dergleichen in Frage.

Mit den vorstehenden Auswertungen ist es möglich, eine komplette Dosieranlage zu überwachen und in komplizierte Überwachungen von Fertigungsstraßen zu integrieren. Die Störmeldungen nach b) bis d) können offenbar so ausgestaltet werden, z.B. durch eine gesonderte Anzeige, daß sie sogleich einen Hinweis auf die Art der Störung enthalten.

Bei bestimmten Einsatzfällen ist es erforderlich, die Druckaufnehmer nicht direkt mit dem zu messenden Produkt in Verbindung zu bringen, weil es sonst zu unerwünschten Nebenwirkungen, wie beispielsweise Produktausfällungen,

...

D 7147                           7

Korrosionen oder ähnlichem kommen kann. Nach Fig. 2 wird dann der Druckaufnehmer 12, vorzugsweise ebenfalls mit Piezoquarz, in einem zusätzlichen Gehäuse 13 untergebracht und mit einer Pufferflüssigkeit 14 beaufschlagt. Letztere wird im Ausführungsbeispiel gegen das zu dosierende Produkt mit Hilfe einer Membran 15 abgedichtet.

...

0173253

LANG APPARATEBAU GMBH

D 7147

<u>Bezugszeichenliste</u>

 1 = Pumpe
 2 = Dosierleitung
 3 = Vordruckaufnehmer
 4 = Dosierventil
 5 = Arbeitsdruckaufnehmer
 6 = Dosierspitze
 7 = Leitung
 8 = Leitung
 9 = Differenzdruckgerät
10 = Differenzdrucksignal
11 = Steuereinheit
12 = Piezoquarz
13 = Gehäuse
14 = Pufferflüssigkeit
15 = Membran

P a t e n t a n s p r ü c h e

1. Dosierkontrolleinrichtung einer ein Dosierventil (4) enthaltenden Dosierleitung (2) mit einem Druckaufnehmer (5) zum Erfassen des Aufbaus des Arbeitsdrucks des zu dosierenden Produkts in der Dosierleitung auf der Ausgangsseite des Dosierventils (4), gekennzeichnet durch einen Druckaufnehmer (3) auf der Eingangsseite des Dosierventils (4) zum Erfassen des Vordrucks des zu dosierenden Produkts in der Dosierleitung (2) und durch Mittel (7 bis 9) zum Bilden der Differenz von Vordruck und Arbeitsdruck mit Differenzdruckausgangssignal (10).

2. Dosierkontrolleinrichtung nach Anspruch 1, dadurch gekennzeichnet, daß den Mitteln (7 bis 9) zum Bilden des Differenzdruckausgangssignals (10) eine bei normalem Ablauf der Dosierung ein Positivsignal liefernde Steuereinheit (11) nachgeschaltet ist.

3. Dosiereinrichtung nach Anspruch 1 oder 2, dadurch gekennzeichnet, daß der Arbeitsdruckaufnehmer (5) zwischen Dosierventil (4) und Produktausgabestelle (6), insbesondere zwischen Ventilöffnungsnadel und Dosierdüse, angeordnet ist.

4. Einrichtung nach einem oder mehreren der Ansprüche 1 bis 3, dadurch gekennzeichnet, daß die Vor- und Arbeitsdruckaufnehmer (3, 5) längs der Dosierleitung (2) möglichst nahe beieinander, insbesondere unmittelbar vor und hinter dem Dosierventil (4), angeordnet sind.

5. Einrichtung nach einem oder mehreren der Ansprüche 1 bis 4, dadurch gekennzeichnet, daß Druckaufnehmer (3, 5)

...

D 7147

mit Piezoquarz vorgesehen sind.

6. Einrichtung nach einem oder mehreren der Ansprüche 1 bis 5, dadurch gekennzeichnet, daß die Druckaufnehmer (12) in gegenüber dem zu dosierenden Produkt abgedichteten, insbesondere mit Pufferflüssigkeit (14) gefüllten, Druckgehäusen (13) untergebracht sind (Fig. 2).

7. Einrichtung nach Anspruch 6, dadurch gekennzeichnet, daß der die Pufferflüssigkeit (14) enthaltende Raum des Dosiergehäuses (13) mit einer dichtenden Membran (15), insbesondere aus Polytetrafluoräthylen, an das das gegebenenfalls zu dosierende Produkt führende Innere der Dosierleitung (2) angrenzt.

8. Einrichtung nach Anspruch 6 oder 7, dadurch gekennzeichnet, daß das Druckgehäuse (13) im wesentlichen aus Polytetrafluoräthylen besteht.

9. Verfahren zum Betrieb der Dosierkontrolleinrichtung nach einem oder mehreren der Ansprüche 1 bis 8, dadurch gekennzeichnet, daß innerhalb einer vorgegebenen Dosierzeit die Differenz zwischen Vordruck einerseits und Arbeitsdruck andererseits ermittelt und auf eine Steuer- oder Alarmeinheit geschaltet wird.

10. Verfahren nach Anspruch 9, dadurch gekennzeichnet, daß der Arbeitsdruckaufbau und der Arbeitsdruckabbau in Differenzdruckwerten in Bezug auf den Vordruck gemessen werden.

0173253

1/1

Fig.1

Fig.2